(19) Europäisches Patentamt
European Patent Office
Office européen des brevets

(11) **EP 1 813 631 B1**

(12) **EUROPEAN PATENT SPECIFICATION**

(45) Date of publication and mention
of the grant of the patent:
**23.03.2011 Bulletin 2011/12**

(21) Application number: **05787892.8**

(22) Date of filing: **28.09.2005**

(51) Int Cl.:
*C08G 18/10* (2006.01)      *C08G 18/65* (2006.01)
*C09J 175/04* (2006.01)      *C09J 175/08* (2006.01)
*C08G 18/32* (2006.01)

(86) International application number:
**PCT/JP2005/017874**

(87) International publication number:
**WO 2006/035828 (06.04.2006 Gazette 2006/14)**

(54) **PROCESS FOR PRODUCING URETHANE RESIN AND PRESSURE-SENSITIVE ADHESIVE**

VERFAHREN ZUR HERSTELLUNG VON URETHANHARZ UND HAFTKLEBSTOFF

PROCEDE DE FABRICATION DE RESINE URETHANE ET ADHESIF SENSIBLE A LA PRESSION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **30.09.2004 JP 2004288409**

(43) Date of publication of application:
**01.08.2007 Bulletin 2007/31**

(73) Proprietor: **Asahi Glass Company, Limited
Chiyoda-ku, Tokyo 100-8405 (JP)**

(72) Inventors:
• **SHIMOMA, Hitoshi,
c/o Asahi Glass Urethane Co. Ltd
Kamisu-city,
Ibaraki 3140195 (JP)**
• **HAMASAKI, Kota,
c/o Asahi Glass Urethane Co., Ltd.
Kamisu-city,
Ibaraki 3140195 (JP)**

• **NAKAMURA, Makito,
c/o Asahi Glass Urethane Co. Ltd
Kamisu-city,
Ibaraki 3140195 (JP)**
• **SATO, Hisashi,
c/o Asahi Glass Urethane Co., Ltd.
Kamisu-city,
Ibaraki 3140195 (JP)**
• **WADA, Hiroshi,
c/o Asahi Glass Urethane Co., Ltd.
Kamisu-city,
Ibaraki 3140195 (JP)**

(74) Representative: **Hartz, Nikolai
Wächtershäuser & Hartz
Patentanwaltspartnerschaft
Weinstrasse 8
80333 München (DE)**

(56) References cited:
EP-A- 0 367 362      EP-A- 1 134 247
JP-A- 2 209 915      JP-A- 8 127 632
JP-A- 9 279 119      JP-A- 11 152 322
JP-A- 57 133 115      JP-A- 2003 012 751
JP-A- 2004 300 277      US-A- 5 703 158

**Description**

TECHNICAL FIELD

The present invention relates to a process for urethane resin production in which a urethane resin usable as a raw material for pressure-sensitive adhesives is produced. The invention further relates to a pressure-sensitive adhesive.

BACKGROUND ART

Pressure-sensitive adhesives are used in, e.g., tapes, labels, seals, decorative sheets, anti-slip sheets, double-faced pressure-sensitive adhesive tapes, and the like, and acrylic pressure-sensitive adhesives are extensively employed as such pressure-sensitive adhesives. Especially recently, acrylic pressure-sensitive adhesives tend to be used in a wide range of applications ranging from strong-tack pressure-sensitive adhesives having a higher adhesive force to slight-tack pressure-sensitive adhesives having a low peel force for, e.g., protective films in motor vehicles and electronic materials. However, materials coated with acrylic pressure-sensitive adhesives have had insufficient removability although excellent in adhesive force. This is because the acrylic pressure-sensitive adhesives, after application to adherends, increase in adhesive force or migration property with the lapse of time and stripping the adhesive tapes or sheets is apt to result in adhesive deposit. In the case where acrylic pressure-sensitive adhesives are used as slight-tack pressure-sensitive adhesives, there have been problems that holding power is insufficient and differences in hardener amount are apt to result in fluctuations in adhesive force. Furthermore, in the case where acrylic monomers remain in a pressure-sensitive adhesive, this adhesive may have problems concerning odor and skin irritation.
There are cases where rubber-based pressure-sensitive adhesives are used as pressure-sensitive adhesives, and addition of a low-molecular plasticizer is indispensable for the rubber-based pressure-sensitive adhesives for the purpose of handleability and regulating pressure-sensitive adhesive performance. However, there has been a problem that during the lapse of a prolonged time period, the low-molecular plasticizer migrates to the surface to cause a considerable decrease in performance.
Urethane-resin-based pressure-sensitive adhesives also are known. Urethane-resin-based pressure-sensitive adhesives generally have had the following problem. Increasing the tackiness reduces the strength of the resin, which results in readily occurrence of adhesive deposit and hence results in insufficient removability, while increasing the resin strength results in a decrease in tackiness. An example of techniques for reconciling pressure-sensitive adhesive performance with removability patent documents 1 to 3 disclose the use of polyols including a trifunctional polyol as a raw material to thereby improve the strength of a resin. Furthermore, patent documents 4 to 7 disclose the use of a crosslinking agent having a functionality of 3 or higher to thereby improve the strength of a resin.

Patent Document 1: JP-A-2003-221570
Patent Document 2: JP-A-2000-256630
Patent Document 3: JP-A-2000-256638
Patent Document 4: JP-A-2001-253819
Patent Document 5: JP-A-2002-38119
Patent Document 6: JP-A-2002-53828
Patent Document 7: JP-A-2003--12751

DISCLOSURE OF THE INVENTION

PROBLEMS THAT THE INVENTION IS TO SOLVE

In the inventions disclosed in patent documents 1 to 3, a polymer obtained by crosslinking a hydroxyl-terminated prepolymer, which is obtained from polyether polyols including a trifunctional polyether polyol and less than an equivalent amount of a polyisocyanate, is used as a pressure-sensitive adhesive. This pressure-sensitive adhesive, however, tends to have reduced pressure-sensitive adhesive performance although improved in unsusceptibility to adhesive deposit.
On the other hand, the inventions disclosed in patent documents 4 to 6 are intended to increase the strength of a resin by crosslinking an isocyanate-group-terminated prepolymer with a specific crosslinking agent having a functionality of 3 or higher. However, it has been difficult to control the reaction because of its high reactivity. Namely, there has been a problem that reducing the amount of a chain extender results in a urethane resin having reduced cohesive force and results in insufficient removability, while increasing the amount of the chain extender results in a urethane resin which disadvantageously has a high viscosity and is difficult to apply.
In the chain extender disclosed in patent documents 4 to 6, an acrylic monomer is used as a compound having an unsaturated double bond. Consequently, these techniques have the same problem as the acrylic pressure-sensitive adhesives. In addition, it is necessary to separately produce the chain extender and this increases the cost of the pressure-sensitive adhesive to be obtained.

Furthermore, the invention disclosed in patent document 7 relates to a pressure-sensitive adhesive which comprises a urethane-urea resin having hydroxyl groups as side chains and has adhesive force. It is essential to use a compound having two amino groups as a chain extender and this poses a problem concerning production that reactivity is high and therefore gelation is apt to occur. In addition, since this pressure-sensitive adhesive becomes to have a higher viscosity, this poses a problem concerning application that it is difficult to attain uniform coating thickness and coating surface smoothness. When a large amount of a solvent is used to control the viscosity to a usable viscosity for an improvement, this poses a problem that coating failures such as, e.g., dripping occur during application, a problem of difficulty in forming a thick coating, a problem of necessitating a prolonged time period for drying, or a problem of causing foaming. Furthermore, since the polyurethane-urea resin comes to have higher cohesive force through reaction with a polyisocyanate resin, the pressure-sensitive adhesive has had a drawback that removability is obtained only when it is in medium-tack and lower-tack regions.

The invention has been achieved in view of the problems described above. An object of the invention is to provide a process for producing a urethane resin which has a low viscosity and is usable as a wide range of pressure-sensitive adhesives ranging from a strong-tack region to a slight-tack region.

Another object of the invention is to provide a pressure-sensitive adhesive which comprises a urethane resin, has excellent removability in a wide range of from a strong-tack region to a slight-tack region, and has a low cost. In addition, this pressure-sensitive adhesive contains no acrylic compound, is inexpensive, and has low skin irritation, a small temperature dependence of adhesive force, and excellent workability.

MEANS FOR SOLVING THE PROBLEMS

The process for urethane resin production of the invention comprises reacting a polyol with a polyisocyanate compound in such a proportion that isocyanate groups are in excess to thereby obtain an isocyanate-group-terminated prepolymer, thereafter reacting the isocyanate-group-terminated prepolymer with a chain extender, and reacting the resultant polymer with a chain terminator, wherein the chain extender has three or more functional groups reactive with an isocyanate group, wherein one of the functional groups is a primary amino group or a secondary amino group, another is a primary hydroxyl group, and the remaining functional group(s) are a secondary hydroxyl group or a tertiary hydroxyl group.

In the process for urethane resin production of the invention, the polyol preferably comprises a polyoxyalkylene polyol having an average number of hydroxyl groups of 2 or larger and a hydroxyl value of 5.6 to 600 mg-KOH/g.

Furthermore, in the process for urethane resin production of the invention, the chain extender preferably comprises at least one member selected from N-(2-hydroxypropyl)ethanolamine, 1-methylamino-2,3-propanediol, and 1-amino-2,3-propanediol.

The invention provides a pressure-sensitiva adhesive comprising a urethane resin obtained by the production process described above.

The pressure-sensitive adhesive of the invention preferably comprises a urethane resin obtained by reacting a urethane resin that is obtained by the production process described above with a polyisocyanate compound.

ADVANTAGES OF THE INVENTION

The process for urethane resin production of the invention can yield a urethane resin which has a low viscosity and is usable as a wide range of pressure-sensitive adhesives ranging from a strong-tack region to a slight-tack region. Pressure-sensitive adhesives employing this urethane resin have excellent removability in a wide range of from a strong-tack region to a slight-tack region and have a low cost. When this urethane resin is used, a pressure-sensitive adhesive containing no acrylic compound can be obtained.

The pressure-sensitive adhesive of the invention has excellent removability, is inexpensive, is reduced in migration property to adherends, skin irritation, and temperature dependence of adhesive force, and is prevented from suffering the migration of low-molecular weight compounds.

BEST MODE FOR CARRYING OUT THE INVENTION

(Process for Producing Urethane Resin)

The process for urethane resin production of the invention comprises reacting a polyol with a polyisocyanate compound in such a proportion that isocyanate groups are in excess to thereby produce an isocyanate-group-terminated prepolymer (prepolymer formation reaction), thereafter reacting the isocyanate-group-terminated prepolymer with a chain extender (chain extension reaction), and reacting the resultant polymer with a chain terminator to deactivate the ends (termination reaction) and thereby produce a urethane resin. The urethane resin obtained by this process is usable as a raw material for urethane-resin-based pressure-sensitive adhesives.

[Polyol]

Examples of the polyol include a polyoxyalkylene polyol, polyester polyol, polyoxytetramethylene polyol, and polycarbonate polyol.

The polyoxyalkylene polyol can be produced by subjecting an alkylene oxide to ring-opening addition in the presence of a ring-opening polymerization catalyst and a polyvalent initiator.
Preferred alkylene oxides are ones having 2 to 6 carbon atoms. Examples thereof include ethylene oxide, propylene oxide, 1,2-butylene oxide, and 2,3-butylene oxide. Especially preferred of these are ethylene oxide, propylene oxide, and combinations of these.

Examples of the ring-opening polymerization catalyst include general alkali metal compound catalysts such as potassium hydroxide (KOH) and sodium hydroxide; cesium metal compound catalysts such as cesium hydroxide; composite metal cyanide complex catalysts such as zinc hexacyanocobaltate complex; and phosphazene catalysts.
The polyvalent initiator is a compound having two or more active hydrogen atoms capable of reacting with alkylene oxides. Examples thereof include polyhydric alcohols, polyhydric phenols, polyamines, and alkanolamines. The valence thereof is preferably 2 to 6, more preferably 2 to 3, most preferably 2. Examples of the divalent initiator include ethylene glycol, diethylene glycol, , propylene glycol, dipropylene glycol, neopentyl glycol, 1,4-butanediol, 1,6-hexanediol, bisphenol A, and relatively low-molecular polyoxyalkylene polyols obtained by adding a small amount of an alkylene oxide to these compounds. In the case where a composite metal cyanide complex catalyst is used, it is preferred to use a polyoxyalkylene polyol having a molecular weight per hydroxyl group of 200 to 500 as the polyvalent initiator. Only one of those polyvalent initiators may be used, or a combination of two or more thereof may be used.

The polyoxyalkylene polyol has an average number of hydroxyl groups of 2 or larger, preferably 2 to 6, more preferably 2 to 3, most preferably 2. Incidentally, the number of hydroxyl groups per molecule in a polyoxyalkylene polyol coincides with the number of active hydrogen atoms present in the polyvalent initiator used for producing the polyol.
The hydroxyl value of the polyoxyalkylene polyol is preferably 5.6 to 600 mg-KOH/g. In case where the hydroxyl value of the polyoxyalkylene polyol is lower than 5.6 mg-KOH/g, this polyol has a high molecular weight and is hence less apt to react with the polyisocyanate compound and the prepolymer obtained tends to less react with a chain extender. On the other hand, in case where the hydroxyl value of the polyoxyalkylene polyol exceeds 600 mg-KOH/g, this polyol gives a prepolymer in which the relative proportion of the isocyanate compound is high and this isocyanate-group-terminated prepolymer is apt to gel when reacted with a chain extender.
The hydroxyl value of the polyoxyalkylene polyol can be suitably selected from the range shown above according to the degree of adhesive force of the pressure-sensitive adhesive to be finally obtained. When a pressure-sensitive adhesive which has an adhesive force not lower than in a low-tack region, where the adhesive force exceeds 1 N/25 mm, and not higher than in a strong-tack region, where the adhesive force is not higher than 50 N/25 mm, is to be obtained, then the hydroxyl value is preferably 5.6 to 112 mg-KOH/g, more preferably 11 to 112 mg-KOH/g, most preferably 18 to 75 mg-KOH/g.
When a pressure-sensitive adhesive having an adhesive force in a slight-tack region, where the adhesive force is not higher than 1 N/25 mm, is to be obtained, then the hydroxyl value is preferably higher than 112 mg-KOH/g, more preferably 113 to 600 mg-KOH/g, most preferably 130 to 300 mg-KOH/g.
A mixture of two or more polyoxyalkylene polyols may be used. In this case, it is preferred that the average hydroxyl value thereof be within that range.

The polyoxyalkylene polyol has a degree of unsaturation of preferably 0.3 meq/g or lower, more preferably 0.05 meq/g or lower. As long as the degree of unsaturation of the polyoxyalkylene polyol is 0.3 meq/g or lower, the pressure-sensitive adhesive to be obtained from this polyol is reduced in the content of ingredients migrating therefrom. For producing a polyoxyalkylene polyol having such a low degree of unsaturation, it is preferred to use a cesium metal compound catalyst, composite metal cyanide complex catalyst, phosphazene catalyst, or the like as the ring-opening polymerization catalyst. Most preferred is to use a composite metal cyanide complex catalyst.
A mixture of two or more polyoxyalkylene polyols may be used. In this case also, the average degree of unsaturation and the average hydroxyl value are preferably in the ranges shown above.

As the polyester polyol can be used a known polyester polyol. Examples thereof include polyester polyols obtained by the condensation reaction of a low-molecular diol component with a dibasic acid component. Examples of the low-molecular diol include ethylene glycol, propylene glycol, dipropylene glycol, diethylene glycol, triethylene glycol, butylene glycol, 1,6-hexanediol, 3-methyl-1,5-pentanediol, 3,3-dimethylolheptane, polyoxyethylene glycol, polyoxypropylene glycol, 1,3-butanediol, 1,4-butanediol, neopentyl glycol, octanediol, butylethylpentanediol, 2-ethyl-1,3-hexanediol, cyclohexanediol, and bisphenol A. Glycerol, trimethylolpropane, pentaerythritol, or the like may be used in combination with the low-molecular diol. Examples of the dibasic acid component include aliphatic dibasic acids or aromatic dibasic acids, such as terephthalic acid, adipic acid, azelaic acid, sebacic acid, phthalic anhydride, isophthalic anhydride, and trimellitic acid. Also usable are polyester polyols obtained by the ring-opening polymerization of a cyclic ester compound, e.g., a lactone, such as poly(e-caprolactone), poly($\beta$-methyl-$\gamma$-valerolactone), and polyvalerolactone.

The polyester polyol has a hydroxyl value of preferably 20 to 600 mg-KOH/g, more preferably 30 to 300 mg-KOH/g.

A mixture of two or more polyester polyols may be used. In this case, it is preferred that the average hydroxyl value thereof be within the range shown above.

In the case where a polyoxyalkylene polyol and a polyester polyol are used in combination as the polyol, the proportion of either is regulated to preferably 10% by mass or lower, more preferably 5% by mass or lower, based on the sum of both because they differ in reactivity and are apt to cause the reaction solution to gel or become cloudy. It is preferred that a polyoxyalkylene polyol should not be used in combination with a polyester polyol. Incidentally, in case where the reaction solution becomes cloudy, a colorless and transparent resin is not obtained.

[Polyisocyanate Compound]

As the polyisocyanate compound can be used a known aromatic polyisocyanate, aliphatic polyisocyanate, alicyclic polyisocyanate, or the like.

Examples of the aromatic polyisocyanate include 1,3-phenylene diisocyanate, 1,4-phenylene diisocyanate, 4,4'-diphenylmethane diisocyanate (hereinafter referred to as MDI), 2,4-tolylene diisocyanate (hereinafter referred to as 2,4-TDI), 2,6-tolylene diisocyanate (hereinafter referred to as 2,6-TDI), 4,4'-toluidine diisocyanate, 2,4,6-triisocyanatotoluene, 1,3,5-triisocyanatobenzene, dianisidine diisocyanate, 4,4'-diphenyl ether diisocyanate, 4,4',4"-triphenylmethane triisocyanate, 1,4-tetramethylxylylene diisocyanate, and 1,3-tetramethylxylylene diisocyanate.

Examples of the aliphatic polyisocyanate include trimethylene diisocyanate, tetramethylene diisocyanate, hexamethylene diisocyanate (HDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the alicyclic polyisocyanate include 3-isocyanatomethyl-3,5,5-trimethylcyclohexyl isocyanate (IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis (cyclohexyl isocyanate), and 1,4-bis (isocyanatomethyl) cyclohexane.

Modified products of the polyisocyanates described above may also be used, such as trimethylolpropane adduct type modified products, biuret type modified products obtained by reaction with water, and isocyanurate type modified products in which an isocyanurate ring has been incorporated.

Preferred of the polyisocyanates described above are one or more members selected from HDI, IPDI, MDI, 2,4-TDI, 2,6-TDI, and the modified products of these. In the case where weatherability is important, one or more members selected from HDI, IPDI, and the modified products of these are especially preferred.

[Prepolymer Formation Reaction]

The prepolymer formation reaction is not particularly limited. Examples thereof include a method in which a polyol and a polyisocyanate compound are charged into a reactor optionally together with a urethane formation catalyst and a solvent and reacted.

With respect to the proportions of the polyol and the polyisocyanate compound, these are reacted so that the index [( (number of NCO groups of the polyisocyanate compound)/(number of OH groups of the polyol compound))$\times$100] is preferably 110 to 300, more preferably 130 to 250, in order for isocyanate groups to remain at ends. In case where the index is smaller than 110, gelation tends to occur to cause a viscosity increase. In case where the index exceeds 300, there is a tendency that the prepolymer contains the unreacted isocyanate compound in too high a concentration and this makes the subsequent chain extension reaction difficult to conduct.

The isocyanate group content (NCO%) of the isocyanate-group-terminated prepolymer is preferably 0.5 to 12% by mass, more preferably 1 to 4% by mass, although it varies depending on the reactivity of the compounds used and the amount of the chain extender to be added. In case where the NCO% thereof is lower than 0.5% by mass, a chain extender cannot be reacted in a sufficient amount. In case where the NCO% thereof exceeds 12% by mass, the chain extension reaction tends to be difficult to control.

Examples of the urethane formation catalyst to be used in the prepolymer formation reaction include known ones such as tertiary amine compounds and organometallic compounds.

Examples of the tertiary amine compounds include triethylamine, triethylenediamine, N,N-dimethylbenzylamine, N-methylmorpholine, and 1,8-diazabicyclo[5.4.0]undecene-7 (DBU).

Examples of the organometallic compounds include tin compounds and tin-free compounds. Examples of the tin compounds include dibutyltin dichloride, dibutyltin oxide, dibutyltin dibromide, dibutyltin dimaleate, dibutyltin dilaurate (DBTDL), dibutyltin diacetate, dibutyltin sulfide, tributyltin sulfide, tributyltin oxide, tributyltin acetate, triethyltin ethoxide, tributyltin ethoxide, dioctyltin oxide, tributyltin chloride, tributyltin trichloroacetate, and tin 2-ethylhexanoate. Examples of the tin-free compounds include titanium compounds such as dibutyltitanium dichloride, tetrabutyl titanate, and butoxytitanium trichloride, lead compounds such as lead oleate, lead 2-ethylhexanoate, lead benzoate, and lead naphthenate, iron compounds such as iron 2-ethylhexanoate and acetylacetonatoiron, cobalt compounds such as cobalt benzoate and cobalt 2-ethylhexanoate, zinc compounds such as zinc naphthenate and zinc 2-ethylhexanoate, and zirconium naphthenate.

Preferred of the urethane formation catalysts described above are DBTDL, tin 2-ethylhexanoate, and the like. The urethane formation catalysts described above may be used singly or in combination.

Examples of the solvent include aromatic hydrocarbons such as toluene and xylene, aliphatic hydrocarbons such as hexane, esters such as ethyl acetate and butyl acetate, ketones such as methyl ethyl ketone (MEK), dimethylformamide, and anone and analogues thereof. These may be used singly or in combination of two or more thereof.

The reaction temperature is preferably 120°C or lower, more preferably 70 to 100°C. In case where the reaction temperature exceeds 120°C, not only allophanate formation reaction proceeds, making it difficult to synthesize an isocyanate-group-terminated prepolymer having a given molecular weight and a given structure, but also the rate of the reaction is difficult to control. When the reaction temperature is 70 to 100°C, the reaction time is preferably 2 to 20 hours.

[Chain Extender]

The chain extender is one having three or more functional groups reactive with an isocyanate group, in which one of the functional groups is a group selected from a primary amino group and a secondary amino group, another is a primary hydroxyl group (these are highly reactive functional groups and hereinafter referred to as functional groups a), and the remaining functional group(s) are a secondary hydroxyl group or a tertiary hydroxyl group (this is a lowly reactive functional group and hereinafter referred to as functional group b).

This chain extender preferably has a molecular weight of 500 or lower. Examples thereof include compounds having three functional groups reactive with an isocyanate group. More particularly, examples thereof include (1) a compound having one primary amino group and one primary hydroxyl group as functional groups a and having one secondary hydroxyl group as functional group b. Examples thereof further include (2) a compound having one secondary amino group and one primary hydroxyl group as functional groups a and having one secondary hydroxyl group as functional group b.

Although the compound has three or more functional groups, functional groups a only mainly react with the isocyanate-group-terminated prepolymer and functional group b is less apt to react. It is hence thought that even after reaction with the isocyanate-group-terminated prepolymer, functional group b remains in the resin.

Examples of (1) include 1-amino-2,3-propanediol (APD). Examples of (2) include 1-methylamino-2,3-propanediol (MAPD) and N-(2-hydroxypropyl)ethanolamine.

[Other Chain Extenders]

In the invention, the compound described above may be used in combination with other chain extenders. The chain extenders which can be optionally used preferably are compounds having two or more functional groups reactive with an isocyanate group and having a molecular weight of 500 or lower. Examples of such optional chain extenders include diamine compounds such as isophoronediamine and ethylenediamine, diol compounds such as 1,4-butanediol, 1,6-hexanediol, and ethylene glycol, and alkanolamines such as monoethanolamine. A small amount of a triol compound may also be used in combination. The amount of such optional chain extenders is preferably 50% by mole or smaller, more preferably 20% by mole or smaller, based on all chain extenders used.

[Chain Extension Reaction]

The chain extension reaction is not particularly limited. Examples thereof include 1) a method in which a solution of the isocyanate-group-terminated prepolymer is introduced into a flask and the chain extender is dropped into the flask to react it with the prepolymer; 2) a method in which the chain extender is introduced into a flask and a solution of the isocyanate-group-terminated prepolymer is dropped into the flask to react it with the chain extender; and 3) a method in which a solution of the isocyanate-group-terminated prepolymer is diluted with a solvent and a given amount of the chain extender is then introduced into the flask at a time to react it with the prepolymer. Method 1) or 3) is preferred because the concentration of isocyanate groups is gradually decreased and, hence, a homogeneous resin is apt to be obtained.

The amount of the chain extender to be added varies depending on the NCO% of the isocyanate-group-terminated prepolymer. However, the amount thereof is preferably such that the isocyanate-group-terminated prepolymer comes, after the chain extension reaction, to have an NCO% of 0.01 to 1.0%, more preferably 0.05 to 0.2%. In case where the chain extender is used in such an amount that the isocyanate-group-terminated prepolymer comes to have an NCO% lower than 0.01%, the reaction mixture during the chain extension reaction is apt to rapidly increase in viscosity and gel. In case where the NCO% of the isocyanate-group-terminated prepolymer is over 0.4%, chain extension reaction occurs insufficiently and a desired molecular weight is difficult to obtain.

The reaction temperature in the chain extension reaction is preferably 80°C or lower. In case where the reaction temperature exceeds 80°C, the reaction rate becomes too high, making it difficult to control the reaction. Consequently, at such too high temperatures, a urethane resin having a desired molecular weight and a desired structure tends to be difficult to obtain. When the chain extension reaction is conducted in the presence of a solvent, the reaction temperature is preferably not higher than the boiling point of the solvent. Especially in the presence of MEK or ethyl acetate, the temperature is preferably 40 to 60°C

[Chain Terminator]

As the chain terminator can be used a compound having only one active hydrogen atom reactive with an isocyanate group or a compound having only one amino group. Examples of the compound having only one active hydrogen atom reactive with an isocyanate group include monoamine compounds such as diethylamine and morpholine and monool compounds such as methanol. As the compound having only one amino group, use can be made of a compound having a primary amino group or a secondary amino group. The compound may be one which has one or two hydroxyl groups besides an amino group. Use can be made of, for example, a monoamine compound having a hydroxyl group, such as 2-amino-2-methyl-1-propanol (AMP), monoisopropanolamine, or aminopropanol. Although the compound having one primary amino group has two active hydrogen atoms, this compound is substantially equal to monofunctional compounds because after one active hydrogen atom has reacted, the remaining active hydrogen atom has low reactivity. Also, the compound having an amino group and a hydroxyl group is substantially equal to monofunctional compounds because the hydroxyl group has lower reactivity than the amino group.

The amount of the chain terminator to be added is preferably such that the proportion of the chain terminator is from 1 mol to 2 mol per mol of the terminal isocyanate groups remaining after the chain extension reaction. In case where the proportion thereof is smaller than 1 mol, isocyanate groups remain after the termination reaction and, hence, the urethane resin obtained is unstable. Proportions thereof exceeding 2 mol are undesirable because the amount of low-molecular weight compounds increases.

The number-average molecular weight of the urethane resin thus obtained is preferably 10,000 or higher in terms of the molecular weight determined through measurement by GPC and calculation for standard polystyrene. The number-average molecular weight thereof is more preferably 30,000 or higher in order for the urethane resin to exhibit removability even when formulated into a pressure-sensitive adhesive having an adhesive force exceeding 15 N/25 mm, i.e., an adhesive force in a high-tack region. Number-average molecular weights thereof lower than 10,000 are undesirable because pressure-sensitive adhesive properties, in particular, holding power, decrease considerably. Although there is no particular upper limit, number-average molecular weights exceeding 300,000 are undesirable because there is a possibility that such a urethane resin might gel. Consequently, the number-average molecular weight of the urethane resin is preferably 300,000 or lower.

[Solvent]

The chain extension reaction may be conducted in any of the aforementioned solvents according to need.

[Additives]

Additives may be added to the urethane resin according to need. Examples of the additives include fillers such as talc, calcium carbonate, and titanium oxide, tackifiers, colorants, ultraviolet absorbers, antioxidants, antifoamers, and light stabilizers.

The process for urethane resin production explained above is a method in which an isocyanate-group-terminated prepolymer is reacted with a specific chain extender and then with a chain terminator. In the chain extension reaction, the highly reactive functional groups among the functional groups, i.e., one functional group which is a primary amino group or secondary amino group and another functional group which is a primary hydroxyl group, readily react with the isocyanate-group-terminated prepolymer. On the other hand, the secondary hydroxyl group or tertiary hydroxyl group, which has low reactivity, is thought to remain in the urethane resin because it is less apt to react with the isocyanate-group-terminated prepolymer. Since this chain extension reaction is easy to control the reactivity, the reaction product can be inhibited from gelling and the urethane resin can be prevented from increasing in viscosity.

Furthermore, functional groups remaining in the urethane resin can be used to crosslink the urethane resin. It is therefore thought that when this urethane resin is used as a raw material, a urethane-resin-based pressure-sensitive adhesive having excellent removability can be obtained.

In addition, the chain extender to be used can be an easily available one. A low cost can hence be attained.

(Pressure-Sensitive Adhesive)

The pressure-sensitive adhesive of the invention will be explained below.

The pressure-sensitive adhesive of the invention comprises a urethane resin obtained by the process for urethane resin production described above.

The urethane resin obtained by the production process described above by itself has pressure-sensitive adhesive performance and, hence, this resin as it is can be used as a pressure-sensitive adhesive. However, by further reacting the secondary hydroxyl groups or tertiary hydroxyl groups remaining in the urethane resin with a polyisocyanate compound as a crosslinking agent, a pressure-sensitive adhesive having better removability can be obtained. Namely, the invention provides a pressure-sensitive adhesive obtained by reacting the urethane resin described above with a polyisocyanate compound.

[Crosslinking Agent]

Polyisocyanate compounds usable as a crosslinking agent are polyfunctional polyisocyanates such as the polyisocyanate compounds described above and modified products of these, e.g., trimethylolpropane adduct type modified products, biuret type modified products, or isocyanurate type modified products. Preferred of these are modified products having more than two functional groups on the average. For example, use can be made of Duranate P301-75E (trimethylolpropane adduct type HDI manufactured by Asahi Chemical Co., Ltd.; isocyanate group content, 12.9% by mass; solid content, 75% by mass), Colonate L (trimethylolpropane adduct type TDI manufactured by Nippon Polyurethane Co., Ltd.; isocyanate group content, 13.5% by mass; solid content, 75% by mass), or the like.

It is preferred that a polyisocyanate compound having an isocyanate group content (in the case of a solution, the solvent is excluded) of 10 to 30% by mass be reacted in an amount of 20 parts by mass or smaller per 100 parts by mass of the urethane resin. The amount thereof is more preferably 0.01 to 10 parts by mass because more satisfactory removability is demonstrated. In contrast, in case where no polyisocyanate compound is used, the urethane resin is apt to have reduced cohesive force and undergo cohesive failure. In case where the polyisocyanate compound is used in an amount exceeding 20 parts by mass, the resultant urethane resin tends to have too high cohesiveness and reduced adhesive force. By regulating the amount of the polyisocyanate compound to be used, the strength of the pressure-sensitive adhesive can be regulated. Consequently, a pressure-sensitive adhesive having a satisfactory balance between tackiness and strength can be easily obtained.

It is preferred that the polyisocyanate compound should be added to and reacted with the urethane resin just before the pressure-sensitive adhesive is applied to an adherend.

When the crosslinking agent is reacted with the secondary hydroxyl groups remaining in the urethane resin, a urethane formation catalyst can be used. The urethane formation catalyst used in the prepolymer formation reaction can be used as the urethane formation catalyst.

In this invention, the urethane resin crosslinked through the secondary hydroxyl groups or tertiary hydroxyl groups remaining in the urethane resin by reaction with a polyisocyanate compound is presumed to have an excellent balance between pressure-sensitive adhesive performance and strength and have excellent removability while retaining pressure-sensitive adhesive performance. Moreover, since this crosslinked resin is one obtained from the urethane resin described above, it is produced at low cost.

In addition, since the crosslinked urethane resin contains no acrylic compound, this resin is thought to be reduced in migration property to adherends and in skin irritation. Furthermore, this crosslinked urethane resin has a high molecular weight and is less apt to be rigid at low temperatures. This resin is hence thought to have a small temperature dependence of adhesive force. Moreover, this crosslinked urethane resin is thought to be free from the migration of low-molecular weight compounds to the surface, unlike rubber-based pressure-sensitive adhesives.

(Tack Regions)

The pressure-sensitive adhesive of the invention is applicable in all of: a strong-tack region in which the adhesive force exceeds 15 N/25 mm and is not higher than 50 N/25 mm; a medium-tack region in which the adhesive force exceeds 8 N/25 mm and is not higher than 15 N/25 mm; a low-tack region in which the adhesive force exceeds 1 N/25 mm and is not higher than 8 N/25 mm; and a slight-tack region in which the adhesive force is higher than 0 and not higher than 1 N/25 mm.

The adhesive force is measured by the following method. Namely, a pressure-sensitive adhesive layer is formed on a 50-$\mu$m PET film in a thickness of 25 $\mu$m to obtain a pressure-sensitive adhesive sheet. The pressure-sensitive adhesive sheet is cut into a width of 25 mm, and this strip is stuck on a stainless-steel plate having a thickness of 1.5 mm (SUS304 (JIS)) in an atmosphere of 23°C and a relative humidity of 65%. Subsequently, a 2-kg rubber roll is used to conduct press bonding in accordance with JIS Z 0237 (1991). At 30 minutes thereafter, this test piece is examined for adhesive force with the tensile tester as provided for in JIS B 7721 (180° peel; pulling rate, 300 mm/min).

The pressure-sensitive adhesive of the invention may be applied to an adherend which is a plastic film, plastic sheet, polyurethane, paper, polyurethane foam, etc., and can be advantageously used as a tape, label, seal, decorative sheet, anti-slip sheet, double-faced pressure-sensitive adhesive tape, or the like. In the invention, a colorless and transparent urethane resin can be produced. Such a resin is suitable for application to transparent adherends.

Furthermore, the pressure-sensitive adhesive of the invention has the effect of showing excellent removability in the range of from the slight-tack region to the strong-tack region as described above.

Especially when the pressure-sensitive adhesive is a pressure-sensitive adhesive in the slight-tack region (slight-tack type pressure-sensitive adhesive), it is usable as protective tapes for the protection of the surface of various films to be used as a polarizer, retardation film, diffuser, or the like in, e.g., liquid-crystal displays. These protective tapes are required to be capable of being easily applied and stripped off and to be less apt to suffer surface pollution. Consequently, the pressure-sensitive adhesive of the invention which is slightly tacky and has removability is suitable for that application.

When the pressure-sensitive adhesive of the invention is a pressure-sensitive adhesive in the low-tack region to the medium-tack region, it can be sued as a pressure-sensitive adhesive for laminating various films to be used in liquid-crystal displays, etc. It is usable also in applications such as dicing tapes for fixing in silicon wafer cutting. The pressure-sensitive adhesive for use in such application is required to prevent the film from readily peeling off and to conform to deformation of the film. The pressure-sensitive adhesive of the invention which has moderate adhesive force and removability is suitable for such applications.

When the pressure-sensitive adhesive of the invention is a pressure-sensitive adhesive in the strong-tack region, it can be used as a pressure-sensitive adhesive in applications where considerable environmental changes occur, such as advertising signboards, interior and exterior automotive trim parts, and decorative steel sheets for domestic electrical appliances, and in fields where resistance to wind pressure, contacts, etc. is required. These are fields where adhesives have been used hitherto. For use in such applications, the pressure-sensitive adhesives are required to have conformability to external forces and suitability for reapplication and, in particular, to have such properties that after stiff bonding, the pressure-sensitive adhesives can be stripped off without causing adhesive deposit, from the standpoint of recycling. Consequently, the pressure-sensitive adhesive of the invention which is of the strong-tack type but has excellent removability is effective.

Furthermore, the pressure-sensitive adhesive of the invention has a smooth surface when applied in a high solid concentration and can be applied thickly. The pressure-sensitive adhesive can hence impart the cushioning properties characteristics of urethanes. In addition, the zipping which occurs in conventional acrylic systems especially of the low- to medium-tack types can be mitigated.

EXAMPLES

Examples of the invention will be explained below in detail, but these Examples should not be construed as limiting the invention.

(Polyols)

Polyol (1): Polyoxypropylene diol having a hydroxyl value of 56.1 mg-KOH/g produced by reacting propylene oxide using propylene glycol as an initiator and using a KOH catalyst.

Polyol (2): Polyoxypropylene diol having a hydroxyl value of 11.2 mg-KOH/g produced by reacting propylene oxide using an adduct of propylene glycol with propylene oxide having a molecular weight of 700 as an initiator and using zinc hexacyanocobaltate complex catalyst.

Polyol (3): Polyoxypropylene diol having a hydroxyl value of 160.3 mg-KOH/g produced by reacting propylene oxide using propylene glycol as an initiator and using a KOH catalyst.

Polyol (4): Polyoxypropylene diol having a hydroxyl value of 280 mg-KOH/g produced by reacting propylene oxide using propylene glycol as an initiator and using a KOH catalyst.

Polyol (5): Polyoxypropylene diol having a hydroxyl value of 110 mg-KOH/g produced by reacting propylene oxide using propylene glycol as an initiator and using a KOH catalyst.

(Chain Extenders)

MAPD: 1-Methylamino-2,3-propanediol.
Acrylic chain extender: One obtained by subjecting 2.58 g of isophoronediamine, 1.94 g of butyl acrylate, and 2.19 g of 4-hydroxybutyl acrylate to Michael addition reaction.
Compound (C1): N-(2-Hydroxypropyl)ethanolamine.
Compound (C2): N,N-Bis(2-hydroxypropyl)ethanolamine.
Compound (C3): N- (2-Hydroxypropyl)-m-xylylenediamine (compound having primary amino group, secondary (amino group, and secondary hydroxyl group).
Compound (C4) : N-2-Hydroxyethylethylenediamine.

The viscosity at 25°C of each polyurethane solution was measured with a Brookfield viscometer. The number-average molecular weight of the resin component in the polyurethane solution was determined through measurement by gel permeation chromatography and calculation for standard polystyrene.

(EXAMPLE 1: Production of Urethane-Resin-Based Pressure-Sensitive Adhesive)

Into a four-necked flask equipped with a stirrer, reflux condenser, nitrogen introduction tube, thermometer, and dropping funnel were introduced 612 g of polyol (2) and 28 g of IPDI (trade name, Desmodur I; manufactured by Sumitomo Bayer Co., Ltd.). Furthermore, DBTDL was introduced as a urethane formation catalyst in an amount of 50 ppm of the sum of the polyol (2), IPDI, and MAPD. The contents were gradually heated to 100°C to conduct a prepolymer formation reaction for 4 hours to obtain an isocyanate-group-terminated prepolymer. Thereafter, the reaction mixture was cooled to 60°C, and 244 g of ethyl acetate and 244 g of MEK were added thereto. Subsequently, 6 g of MAPD was added as a chain extender and reacted. The reaction was continued at 60°C and, at the time when the NCO% reached 0.2% or lower, 6 g of morpholine as a chain terminator was added to terminate the reaction. The polyurethane solution A obtained was colorless and transparent and had a solid content of 50% by mass. The viscosity of this polyurethane solution was measured. As a result, the viscosity thereof was found to be 5,000 mPa·s/25°C. The resin in this polyurethane solution had a number-average molecular weight of 107,000.
Subsequently, 0.7 g of Duranate P301-75E (trimethylolpropane adduct type HDI manufactured by Asahi Chemical Co., Ltd.; isocyanate group content, 12.9% by mass; solid content, 75% by mass) was added to 100 g of the polyurethane solution A obtained. Furthermore, DBTDL was added as a urethane formation catalyst in an amount of 500 ppm of the sum of the solid component of the polyurethane solution A and the solid component of the crosslinking agent. The resultant mixture was stirred/mixed at 40 rpm for 1 minute to obtain urethane-resin-based pressure-sensitive adhesive Ap.

(EXAMPLES 2 TO 8 AND COMPARATIVE EXAMPLES 1 TO 4)

The same procedure as in Example 1 was conducted under the same conditions as in Example 1, except that the ingredient proportions shown in Table 1 were used. Thus, polyurethane solutions B to H (Examples) and polyurethane solutions a to d (Comparative Examples) were obtained. From these solutions were obtained urethane-resin-based pressure-sensitive adhesives Bp to Hp (Examples) and urethane-resin-based pressure-sensitive adhesives $a_p$ to $d_p$ (Comparative Examples). In Example 3, a mixture of N-(2-hydroxypropyl)ethanolamine (compound (C1)) and N,N-bis (2-hydroxypropyl)ethanolamine (compound (C2)) was used as a chain extender. In Example 8, the same procedure as in Example 7 was conducted except that the crosslinking agent was replaced by Colonate L (trimethylolpropane adduct type TDI manufactured by Nippon Polyurethane Co., Ltd.; isocyanate group content, 13.5% by mass; solid content, 75% by mass).
In the Comparative Examples, chain extenders other than the chain extender according to the invention were used. In Comparative Examples 2 and 3, the amount of the crosslinking agent was changed. The polyurethane solutions obtained in Comparative Examples 2 to 4 had higher viscosities than in the Examples.
It can be seen from those results that when N-(2-hydroxypropyl)-m-xylylenediamine (compound (C3)) or N-2-hydroxyethylethylenediamine (compound (C4)), which each has functional groups including two amino groups and one hydroxyl group, is used as a chain extender, then the reaction is difficult to control and a high viscosity results.
In Comparative Example 1, in which an acrylic chain extender was used, the pressure-sensitive adhesive had problems concerning the state of stripping and skin irritation.

(EVALUATION)

Urethane-resin-based pressure-sensitive adhesives $A_p$ to $H_p$ and $a_p$ to $d_p$ each were applied to a 50-$\mu$m PET film in a thickness of 25 $\mu$m on a dry basis. Each pressure-sensitive adhesive applied was dried in a circulating oven at 100°C for 2 minutes to obtain a pressure-sensitive adhesive sheet. This sheet was aged at 50°C for 2 days, subsequently allowed to stand at 23°C and a relative humidity of 65% for 2 hours, and then examined for the following properties. The results of the evaluation are shown in Table 2.

[Adhesive Force]: The pressure-sensitive adhesive sheet was applied to a stainless-steel plate having a thickness of 1.5 mm (SUS304 (JIS)) at room temperature and press-bonded thereto with a 2-kg rubber roll. At 30 minutes thereafter, this test piece was examined for peel strength (180° peel; pulling rate, 300 mm/min) with the tensile tester as provided for in JIS B 7721.

[Ball Tack]: Measurement was made under the conditions of 23°C and a relative humidity of 65% by the ball tack method as provided for in JIS Z 0237.

[Holding Power]: The pressure-sensitive adhesive sheet was applied to one end of a stainless-steel plate having a thickness of 1.5 mm (SUS304 (JIS)) so that a 25 mm × 25 mm area of the pressure-sensitive adhesive sheet was in contact with the plate. The pressure-sensitive adhesive sheet applied was press-bonded with a roll. Subsequently, the other end of the stainless-steel plate was held so that the pressure-sensitive adhesive sheet hung down from the stainless-steel plate. This test piece was allowed to stand at 40°C for 20 minutes. Thereafter, a load of 1 kg was hung on the pressure-sensitive adhesive sheet, and the time period in seconds required for the pressure-sensitive adhesive sheet to fall off or the distance over which the pressure-sensitive adhesive sheet had shifted over 60 minutes was measured. A pressure-sensitive adhesive sheet which underwent no shifting through 60 minutes and a pressure-sensitive adhesive sheet which fell off are rated as A and C, respectively.

[Removability]: The pressure-sensitive adhesive sheet was applied to a stainless-steel plate (SUS304 (JIS)), subsequently allowed to stand under the conditions of 40°C and a relative humidity of 65%, thereafter cooled to 23°C at a relative humidity of 65%, and then stripped off to visually examine the stainless-steel sheet for an adhesive deposit. In the visual examination, a pressure-sensitive adhesive sheet which was completely free from adhesive migration to the stainless-steel plate is rated as A, a pressure-sensitive adhesive sheet which underwent partial adhesive migration is rated as B, and a pressure-sensitive adhesive sheet which underwent complete adhesive migration is rated as C. In the case where the stripping resulted in an adhesive deposit on the stainless-steel plate, the proportion of the adhesive deposit to the application area was calculated using equation (1) and evaluated.

$$\text{Proportion of adhesive deposit (\%)} = [(\text{area of pressure-sensitive adhesive migrated to stainless-steel plate})/(\text{area in which pressure-sensitive adhesive sheet was applied})]\times100 \qquad \text{equation (1)}$$

[State of Stripping]: A pressure-sensitive adhesive sheet which was smoothly stripped off in manual stripping, a pressure-sensitive adhesive sheet which caused slight zipping, and a pressure-sensitive adhesive sheet which caused considerably zipping are rated as A, B, and C, respectively.

[Skin Irritation]: A pressure-sensitive adhesive for which none of acrylic monomers, acrylic resins, and the like had been used at all is rated as A, and a pressure-sensitive adhesive for which any of these had been used even in a slight amount is rated as C.

As shown in Table 2, the pressure-sensitive adhesives of Examples 1 to 8, for which use had been made of a chain extender having three or more functional groups reactive with an isocyanate group, one of the functional groups being a primary amino group or secondary amino group, one being a primary hydroxyl group, and the remaining functional group(s) being a secondary hydroxyl group or tertiary hydroxyl group, showed excellent removability, satisfactory state of stripping, and low skin irritation even in the case of the strong-tack type.

On the other hand, the pressure-sensitive adhesive of Comparative Example 1, for which an acrylic chain extender had been used, showed poor state of stripping and high skin irritation. Furthermore, the pressure-sensitive adhesive of Comparative Example 3, for which a chain extender having two or more amino groups had been used, did not have removability and had low holding power.

**EP 1 813 631 B1**

[Applicability]

The results of applicability evaluation are shown in Table 3.

[Evaluation of Surface Smoothness]: A pressure-sensitive adhesive was applied to a PET film with a blade coater having an application thickness of 43.75 micrometers (1.75 mils) (1 mil = 0.025 mm) and dried to remove the solvent. Thereafter, the resin surface was visually evaluated for smoothness. A pressure-sensitive adhesive resin having a smooth surface is rated as A, and a pressure-sensitive adhesive resin having an uneven surface due to streaks or undulations is rated as C.

[Suitability for Thick Application]: A pressure-sensitive adhesive was applied to a PET film with a blade coater having an application thickness of 62.5 micrometers (2.5 mils), and the thickness of the resultant coating per 0.025mm (thickness of the resultant coating per mil) was determined. A pressure-sensitive adhesive which had a coating thickness per 0.025mm (coating thickness per mil) of 10 $\mu$m or larger is rated as A, and a pressure-sensitive adhesive having a coating thickness per 0.025mm (coating thickness per mil) smaller than 10 $\mu$m is rated as C.

In Example 9, Example 10, and Comparative Example 5, use was made of pressure-sensitive adhesive Ap, pressure-sensitive adhesive $G_p$, and pressure-sensitive adhesive $b_p$, respectively, as they were.

In Comparative Example 6, a polyurethane solution b' obtained by mixing the polyurethane solution b with an ethyl acetate/MEK = 1/1 (by mass) mixture solution so as to adjust the solid content to 50% by mass was used to crosslink the polymer with a crosslinking agent in the same manner as described above, and the pressure-sensitive adhesive $b_p$' thus obtained was subjected to the tests. In Comparative Example 7, a polyurethane solution d' obtained by adjusting the solid content of the polyurethane solution d to 50% by mass in the same manner was used to crosslink the polymer with a crosslinking agent in the same manner as described above, and the pressure-sensitive adhesive $d_p$' thus obtained was subjected to the tests. Furthermore, in Comparative Example 8, a polyurethane solution b" obtained by mixing the polyurethane solution b with an ethyl acetate/MEK = 1/1 (by mass) mixture solution so as to adjust the viscosity to 3,800 to 5,000 mPa.s was used to crosslink the polymer with a crosslinking agent in the same manner as described above, and the pressure-sensitive adhesive $b_p$" thus obtained was subjected to the tests. The results are shown in Table 3.

In Comparative Examples 6 and 7, the pressure-sensitive adhesives had a drawback concerning applicability that the coating films formed had streaks. These pressure-sensitive adhesives have a problem concerning surface smoothness. In contrast, it can be seen that the pressure-sensitive adhesives of Examples 9 and 10 have a viscosity in a region suitable for application, and further have a high solid content and satisfactory surface smoothness.

As Table 3 shows, the pressure-sensitive adhesives of Examples 9 and 10 had a viscosity in a region suitable for application, had a high solid content, and could be applied thickly. On the other hand, it can be seen that the pressure-sensitive adhesives of Comparative Examples 5 and 8 show poor suitability for thick application when regulated so as to have a viscosity of 4,000 mPa·s.

[Table 1]

Table 1

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|
| Polyol (g) | Polyol (P1) | | 107 | 107 | | | | 107 | 107 | 107 | 206.1 | 206.1 | 284 |
| | Polyol (P2) | 612 | | | | | | | | | | | |
| | Polyol (P3) | | | | 317 | 317 | | | | | | | |
| | Polyol (P4) | | | | | | 250.1 | | | | | | |
| | Polyol (P5) | | | | | | | | | | | | |
| Polyisocyanate (g) | IPDI | 28 | 17.9 | 17.9 | 184 | 181 | 249.8 | | | 17.9 | | | |
| | HDI | | | | | | | | | | | | 35.8 |
| | TDI | | | | | | | 14 | 14 | | 34.57 | 34.57 | |
| Chain extender (g) | MAPD | 6 | 2.5 | | 32.5 | | 46.6 | | | | | | |
| | Acrylic chain extender | | | | | | | | | 6.71 | | | |
| | Compound (C1) | | | 2.42 | | 36.2 | | 2.94 | 2.94 | | | | |
| | Compound (C2) | | | 1.33 | | | | | | | | | |
| | Compound (C3) | | | | | | | | | | 12.25 | 12.25 | |
| | Compound (C4) | | | | | | | | | | | | 5 |
| Terminator (g) | Morpholine | 6.0 | | | | | | | | | | | |
| | AMP | | 1.0 | 1.0 | 16.1 | 17.0 | 17.0 | 0.4 | 0.4 | 1.7 | | | |

(continued)

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|
| Solvent (g) | Methyl ethyl ketone | 244 | 48.5 | 25.8 | 199 | 192 | 282 | 62.1 | 62.1 | 47.7 | 244.3 | 244.3 | 121 |
| | Ethyl acetate | 244 | 48.5 | 29.3 | 199 | 192 | 282 | 62.1 | 62.1 | 47.7 | 244.3 | 244.3 | 121 |
| | Toluene | 160 | 30.9 | | | | | | | 37.9 | | | 80 |
| Solid content (mass%) | | 50 | 50 | 70 | 58 | 59 | 50 | 50 | 50 | 40 | 39 | 39 | 34 |
| Viscosity (mPa·s/25°C) | | 5000 | 3500 | 8500 | 4000 | 4100 | 5000 | 3800 | 3800 | 5000 | 4000 | 4000 | 1700 |
| Number-average molecular weigh | | 107000 | 31000 | 45000 | 21000 | 24000 | 26000 | 90000 | 90000 | 25000 | 55000 | 55000 | 126000 |
| Polyurethane solution | | A | B | C | D | E | F | G | H | a | b | c | d |
| Cross-linking agent (parts) | Duranate P301-75E | 0.7 | 1.0 | 4.0 | 19.0 | 19.0 | 17.0 | 2.5 | | 1.0 | | | 0.7 |
| | Colonate L | | | | | | | | 2.3 | | 0.8 | 0.4 | |
| Catalyst (ppm) | | 500 | 500 | 500 | 500 | 500 | 500 | 500 | | 500 | | | |
| NCO/OH ratio by mole (%) | | 33 | 28 | 69 | 75 | 75 | 80 | 53 | 40 | 20 | 40 | 20 | 20 |
| Urethane-resin-based pressure-sensitive adhesive | | $A_p$ | $B_p$ | $C_p$ | $D_p$ | $E_p$ | $F_p$ | $G_p$ | $H_p$ | $a_p$ | $b_p$ | $C_p$ | $d_2$ |

[Table 2]

Table 2

| | | \multicolumn{12}{c}{Urethane-resin-based pressure-sensitive adhesive} | | | | | | | | | | |
| | | $A_p$ | $B_p$ | $C_p$ | $D_p$ | $E_p$ | $F_p$ | $G_p$ | $H_p$ | $a_p$ | $b_p$ | $c_p$ | $d_p$ |
|---|---|---|---|---|---|---|---|---|---|---|---|---|---|
| Adhesive force (N/25 mm) | | 6.2 | 12 | 15 | 0.72 | 0.11 | 0.05 | 23 | 24 | 7 | 14 | 23 | 12 |
| Ball tack | | 9 | 4 | 11 | <2 | <2 | <2 | 11 | 11 | 5 | 10 | 11 | 10 |
| Holding power | | A | A | A | A | A | A | A | A | A | A | C | A |
| Removability | Visual evaluation | A | A | A | A | A | A | A | A | A | A | C | A |
| | Proportion of adhesive deposit, % | 0 | 0 | 0 | 0 | 0 | 0 | 0 | 0 | 0 | 0 | 10 | 0 |
| State of stripping | | A | B | A | A | A | A | A | A | C | A | A | A |
| Skin irritation | | A | A | A | A | A | A | A | A | C | A | A | A |

[Table 3]

Table 3

| | | \multicolumn{2}{c}{Example} | \multicolumn{4}{c}{Comparative Example} | | | |
| | | 9 | 10 | 5 | 6 | 7 | 8 |
|---|---|---|---|---|---|---|---|
| Polyurethane solution | | A | G | b | b' | d' | b" |
| Solid content (mass%) | | 50 | 50 | 39 | 50 | 50 | 38 |
| Viscosity | | 5000 | 3800 | 4000 | 12500 | 27000 | 4000 |
| Pressure-sensitive adhesive | | $A_p$ | $G_p$ | $b_p$ | $b_p'$ | $d_p'$ | $b_p"$ |
| Applicability | Surface smoothness | A | A | A | C | C | A |
| | Suitability for thick application | A | A | C | A | A | C |
| | $\mu$m/0.025mm ($\mu$m/mil) | 12.5 | 12.5 | 9.8 | 12.5 | 12.5 | 9.5 |

INDUSTRIAL APPLICABILITY

The urethane-resin-based pressure-sensitive adhesive of the invention is applicable to protective films, pressure-sensitive adhesive tapes, pressure-sensitive adhesive labels, pressure-sensitive adhesive seals, anti-slip sheets, double-faced pressure-sensitive adhesive tapes, and the like for use in various fields including the electronic field, clinical field, sports field, and building field.

The entire contents of the description, claims and abstract of Japanese patent application No. 2004-288409, filed on September 30, 2004, are herein incorporated by reference as a disclosure of the description of the invention.

**Claims**

1. A process for producing a urethane resin, which comprises

(i) reacting a polyol with a polyisocyanate compound in such a proportion that isocyanate groups are in excess to thereby obtain an isocyanate-group-terminated prepolymer, thereafter
(ii) reacting the isocyanate-group-terminated prepolymer with a chain extender in a chain extension reaction, and
(iii) reacting the resultant polymer with a chain terminator,

wherein the chain extender has three or more functional groups reactive with an isocyanate group, wherein

(a) one of the functional groups is a primary amino group or a secondary amino group,
(b) another is a primary hydroxyl group, and
(c) the remaining functional group(s) are a secondary hydroxyl group or a tertiary hydroxyl group.

2. The process for producing a urethane resin of claim 1, wherein the polyol comprises a polyoxyalkylene polyol having an average number of hydroxyl groups of 2 or larger and a hydroxyl value of 5.6 to 600 mg-KOH/g.

3. The process for producing a urethane resin of claim 1 or 2, wherein the chain extender comprises at least one member selected from N-(2-hydroxypropyl)ethanolamine, 1-methylamino-2,3-propanediol, and 1-amino-2,3-propanediol.

4. The process for producing a urethane resin according to any one of claims 1 to 3, wherein the isocyanate-group-terminated prepolymer has an isocyanate group content of 0.5 to 12% by mass and the isocyanate-group-terminated prepolymer after the chain extension reaction has an isocyanate group content of 0.01 to 1.0%.

5. A pressure-sensitive adhesive comprising a urethane resin obtained by the production process of any one of claims 1 to 4.

6. A pressure-sensitive adhesive comprising a urethane resin obtained by reacting a urethane resin obtained by the production process of any one of claims 1 to 4 with a polyisocyanate compound.

7. The pressure-sensitive adhesive of claim 5 or 6, which has an adhesive force exceeding 15 N/25 mm.


**Patentansprüche**

1. Verfahren zur Herstellung von Urethanharz, welches umfasst

(i) die Reaktion eines Polyols mit einer Polyisocyanatverbindung in einem solchen Verhältnis, dass Isocyanatgruppen im Überschuss vorliegen, um so ein Isocyanatgruppen-terminiertes Vorpolymer zu erhalten, anschließend daran
(ii) die Reaktion des Isocyanatgruppen-terminierten Vorpolymers mit einem Kettenverlängerer in einer Kettenverlängerungsreaktion und
(iii) die Reaktion des resultierenden Polymers mit einem Kettenabbrecher,

worin der Kettenverlängerer drei oder mehr funktionelle Gruppen hat, die mit einer Isocyanatgruppe reagieren können,
worin

(a) eine dieser funktionellen Gruppen eine primäre Aminogruppe oder eine sekundäre Aminogruppe ist,
(b) eine weitere eine primäre Hydroxylgruppe ist, und
(c) die verbleibende(n) funktionelle(n) Gruppe(n) eine sekundäre Hydroxylgruppe oder eine tertiäre Hydroxylgruppe sind.

2. Verfahren zur Herstellung von Urethanharz gemäß Anspruch 1, worin das Polyol ein Polyoxyalkylenpolyol umfasst, welches eine durchschnittliche Zahl an Hydroxylgruppen von 2 oder mehr hat und eine Hydroxylzahl von 5,6 bis 600 mg KOH/g.

3. Verfahren zur Herstellung von Urethanharz gemäß Anspruch 1 oder 2, worin der Kettenverlängerer zumindest eine Verbindung, ausgewählt aus N-(2-Hydroxypropyl)ethanolamin, 1-Methylamino-2,3-propandiol und 1-Amino-2,3-propandiol, umfasst.

4. Verfahren zur Herstellung von Urethanharz gemäß einem der Ansprüche 1 bis 3, worin das Isocyanatgruppen-terminierte Vorpolymer einen Massenanteil an Isocyanatgruppen von 0,5 bis 12% hat und das Isocyanatgruppen-terminierte Vorpolymer nach der Kettenverlängerungsreaktion einen Massenanteil an Isocyanatgruppen von 0,01 bis 1,0% hat.

**5.** Haftklebstoff, umfassend ein Urethanharz, welches durch das Herstellungsverfahren gemäß einem der Ansprüche 1 bis 4 erhalten wurde.

**6.** Haftklebstoff, umfassend ein Urethanharz, welches durch die Reaktion eines Urethanharzes, das durch das Herstellungsverfahren gemäß einem der Ansprüche 1 bis 4 erhalten wurde, mit einer Polyisocyanatverbindung erhalten wurde.

**7.** Haftklebstoff gemäß Anspruch 5 oder 6, welcher eine Adhäsionskraft hat, die 15 N/25 mm überschreitet.

**Revendications**

**1.** Procédé de production d'une résine d'uréthane, lequel comprend :

i) la réaction d'un polyol avec un composé polyisocyanate dans une proportion telle que des groupes isocyanate sont en excès pour obtenir par là un prépolymère (groupe isocyanate)-terminé, puis
ii) la réaction du prépolymère (groupe isocyanate)-terminé avec un agent d'allongement de chaîne dans une réaction d'allongement de chaîne, et
iii) la réaction du polymère résultant avec un agent de terminaison de chaîne,

dans lequel l'agent d'allongement de chaîne présente trois groupes fonctionnels ou plus réactifs avec un groupe isocyanate,
dans lequel

(a) un des groupes fonctionnels est un groupe amino primaire ou un groupe amino secondaire,
(b) un autre est un groupe hydroxyle primaire, et
(c) le(les) groupe(s) fonctionnel(s) restant(s) sont un groupe hydroxyle secondaire ou un groupe hydroxyle tertiaire.

**2.** Procédé de production d'une résine d'uréthane selon la revendication 1, dans lequel le polyol comprend un polyoxyalkylène polyol présentant un nombre moyen de groupes hydroxyle de 2 ou supérieur et un indice hydroxyle de 5,6 à 600 mg de KOH/g.

**3.** Procédé de production d'une résine d'uréthane selon la revendication 1 ou 2, dans lequel l'agent d'allongement de chaîne comprend au moins un élément choisi parmi la N-(2-hydroxypropyl)éthanolamine, le 1-méthylamino-2,3-propanediol et le 1-amino-2,3-propanediol.

**4.** Procédé de production d'une résine d'uréthane selon l'une quelconque des revendications 1 à 3, dans lequel le prépolymère (groupe isocyanate)-terminé présente une teneur en groupe isocyanate de 0,5 à 12 % en masse et le prépolymère (groupe isocyanate)-terminé présente après la réaction d'allongement de chaîne une teneur en groupe isocyanate de 0,01 à 1,0 %.

**5.** Adhésif sensible à la pression comprenant une résine d'uréthane obtenue par le procédé de production selon l'une quelconque des revendications 1 à 4.

**6.** Adhésif sensible à la pression comprenant une résine d'uréthane obtenue par réaction d'une résine d'uréthane obtenue par le procédé de production selon l'une quelconque des revendications 1 à 4 avec un composé polyisocyanate.

**7.** Adhésif sensible à la pression selon la revendication 5 ou 6, lequel présente une force d'adhérence excédant 15 N/25 mm.

**EP 1 813 631 B1**

## REFERENCES CITED IN THE DESCRIPTION

### Patent documents cited in the description

- JP 2003221570 A
- JP 2000256630 A
- JP 2000256638 A
- JP 2001253819 A
- JP 2002038119 A
- JP 2002053828 A
- JP 2003012751 A
- JP 2004288409 A